# EUROPÄISCHE PATENTSCHRIFT

(11) **EP 1 381 488 B1**
(45) Veröffentlichungstag und Bekanntmachung des Hinweises auf die Patenterteilung: **10.01.2007**
(21) Anmeldenummer: 02766567.8
(22) Anmeldetag: 18.04.2002
(51) Int. Cl.: B23K 9/12

(54) **VORRICHTUNG SOWIE VERFAHREN ZUM FEHLERERKENNEN BEI DER SCHWEISSDRAHTFÖRDERUNG**
DEVICE AND METHOD FOR IDENTIFYING DEFECTS DURING THE FEEDING OF A WELDING ROD
DISPOSITIF ET PROCEDE DE DETECTION DE DEFAUTS LORS DE L'AVANCE D'UN FIL D'APPORT

(30) Priorität: 24.04.2001 AT 6602001
(43) Veröffentlichungstag der Anmeldung: 21.01.2004
(73) Patentinhaber: Fronius International GmbH, 4643 Pettenbach (AT)
(72) Erfinder: WIMROITHER, Walter, A-4562 Steinbach/Ziehberg (AT)
(74) Vertreter: Secklehner, Günter
(86) Internationale Anmeldenummer: PCT/AT2002/000115
(87) Internationale Veröffentlichungsnummer: WO 2002/087815

(56) Entgegenhaltungen:
- WO-A-01/38034
- JP-A- 49 042 550
- JP-A- 50 049 137
- US-A- 4 261 500

## Beschreibung

Die Erfindung betrifft eine Vorrichtung sowie ein Verfahren zum Fehlererkennen bei der Schweißdrahtförderung, wie in den Oberbegriffen der Ansprüche 1 und 8 beschrieben.

In der JP-A-500-49137 ist eine Schweißanlage dargestellt, bei der der Schweißdraht von einer Drahtrolle über ein Schlauchpaket zu einem Schweißbrenner gefördert wird. Hierbei weist die Schweißanlage zwei Antriebsvorrichtungen auf, wobei die erste Antriebsvorrichtung im Bereich der Drahtrolle angeordnet ist und den Schweißdraht von dieser in das Schlauchpaket fördert. Die zweite Antriebsvorrichtung ist im Bereich des Schweißbrenners angeordnet und fördert den Schweißdraht vom Schlauchpaket in den Schweißbrenner. Das Schlauchpaket endet unmittelbar vor der zweiten Antriebsvorrichtung in Förderrichtung des Schweißdrahtes, wobei zwischen dem Schlauchpaket und der Antriebsvorrichtung die Drahtseele einen gekrümmten Verlauf in Form eines Bogens ausführt. Diesem Bogen sind zwei Kontaktelemente zugeordnet, sodass je nach Größe des Bogens ein Kontakt zwischen einem der beiden Kontaktelemente und der Drahtseele hergestellt wird. Damit ist es nunmehr möglich, dass über dieses Mittel der überschüssige Schweißdraht zwischen den beiden Antriebsvorrichtungen erfasst werden kann, sodass beim Kontakt der Drahtseele mit einem der beiden Kontaktelemente eine Ansteuerung zur Reduzierung oder Erhöhung der Fördergeschwindigkeit zumindest einer Antriebsvorrichtung durchgeführt wird.

Weites ist aus der US 4 261 500 A eine Drahtvorschubeinrichtung zum Modulvorschub eines Schweißdrahtes aus großer Entfernung bekannt. Dabei weist die Drahtvorschubeinrichtung mehrere Antriebsvorrichtungen, insbesondere ein stoßendes Vorschubmodul, ein Zwischenvorschubmodul und ein ziehendes Vorschubmodul, auf. Dabei ist die stoßende Antriebsvorrichtung der Drahtrolle zugeordnet, wogegen die ziehende Antriebsvorrichtung dem Schweißbrenner zugeordnet ist. Das Zwischenvorschubmodul ist zwischen diesen positioniert. Weiters sind zwischen der stoßenden und dem ziehenden Antriebsvorrichtung Mittel zum Erfassen der Schweißdrahtförderung angeordnet.

Aus der JP-A 49-42550 ist eine Vorrichtung bekannt, bei der der Schweißdraht zwischen zwei Rollen geführt wird, die über einen Arm federnd gelagert sind. Der Arm ist dabei mit einem Potentiometer verbunden, sodass bei einer Bewegung der Rollen eine Widerstandsänderung vollzogen wird. Die Vorrichtung wird zwischen zwei Drahtvorschüben angeordnet. Der erste Drahtvorschub ist der Drahtrolle zugeordnet und fördert den Schweißdraht von der Drahtrolle über die Vorrichtung in das Schlauchpaket. Die weitere Förderung des Schweißdrahts erfolgt durch den zweiten Drahtvorschub, der im Schweißbrenner bzw. im Bereich des Schweißbrenners, also nach dem Schlauchpaket, angeordnet ist. Durch eine Widerstandsänderung aufgrund einer Rollenbewegung wird zumindest ein Drahtvorschub geregelt, sodass ein Abgleich der beiden Drahtvorschübe durchgeführt werden kann und eine konstante Schweißdrahtförderung gewährleistet ist.

Es sind bereits Vorrichtungen bzw. eine Sensoranordnung gemäß der österr. Patentanmeldung A 1968/99 "Schweißdrahtfördereinrichtung mit Haupt- und Hilfsantrieb" derselben Anmelderin bekannt. Darin wird ein System beschrieben, bei der der Schweißdraht aus seiner Förderrichtung zum Erfassen des Förderdruckes abgelenkt wird. In dieser Anmeldung wird die Sensoranordnung bzw. der Rohrsensor zur Regelung des Förderdruckes eingesetzt. Dabei ist es möglich, daß durch entsprechende Anpassungen die Vorrichtung bzw. der Rohrsensor für die erfindungsgemäße Lösung eingesetzt werden kann.

Der Erfindung liegt die Aufgabe zugrunde, eine Vorrichtung und ein Verfahren zur Fehlererkennung bei der Schweißdrahtförderung zu schaffen, bei dem eine Überwachung der Schweißdrahtförderung, insbesondere des Förderdruckes und/oder des Förderzuges, durchgeführt wird.

Diese Aufgabe der Erfindung wird derartig gelöst, daß im Schweißbrenner eine Sensoranordnung zum Erfassen des Förderdrucks und des Förderzugs für den Schweißdraht angeordnet ist, wobei der Sensoranordnung in Förderrichtung des Schweißdrahtes eine Antriebsvorrichtung für die Schweißdrahtförderung nach geordnet ist.

Vorteilhaft ist hierbei, daß durch die Anordnung der Sensoranordnung eine Erkennung des Festbrennens möglich ist oder ein Defekt im Rohrbogen des Schweißdrahtes sowie der Verschleiß der Drahtseele oder ein Fehler im Drahtfördersystem vor der Sensoranordnung erkannt werden kann. Damit wird auch erreicht, daß feststellbar ist, ob ein Fehler vor oder hinter der Sensoranordnung auftritt bzw. kurz bevorsteht.

Weitere vorteilhafte Ausgestaltungen sind in den Ansprüchen 2 bis 7 beschrieben. Die sich daraus ergebenden Vorteile sind aus der Beschreibung zu entnehmen.

Weiters wird die Aufgabe der Erfindung derart gelöst, daß von einer Sensoranordnung im Schweißbrenner ein Förderdruck und ein Förderzug des Schweißdrahtes erfaßt wird, wobei von der Sensoranordnung jeweils ein Signal bei zu hohem oder zu niedrigem Druck ausgegeben wird und anschließend eine Auswertung von einer Steuervorrichtung vorgenommen wird.

Vorteilhaft ist hierbei, daß durch die Anordnung der Sensoranordnung eine Erkennung des Festbrennens des Schweißdrahtes sowie der Verschleiß der Drahtseele erkannt werden kann, wodurch entsprechende Maßnahmen beispielsweise von der Steuervorrichtung des Schweißgerätes eingeleitet werden können.

Weitere vorteilhafte Maßnahmen sind in den Ansprüchen 9 bis 13 beschrieben. Die sich daraus ergebenden Vorteile sind aus der Beschreibung zu entnehmen.

Die Erfindung wird anschließend durch ein Ausführungsbeispiel näher beschrieben.

Es zeigen:
- Fig. 1: eine schematische Darstellung einer Schweißmaschine bzw. eines Schweißgerätes;
- Fig. 2: ein Ausführungsbeispiel einer Vorrichtung, insbesondere eine Sensoranordnung, für den Schweißbrenner zum Erfassen des Förderdruckes und des Förderzuges in vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

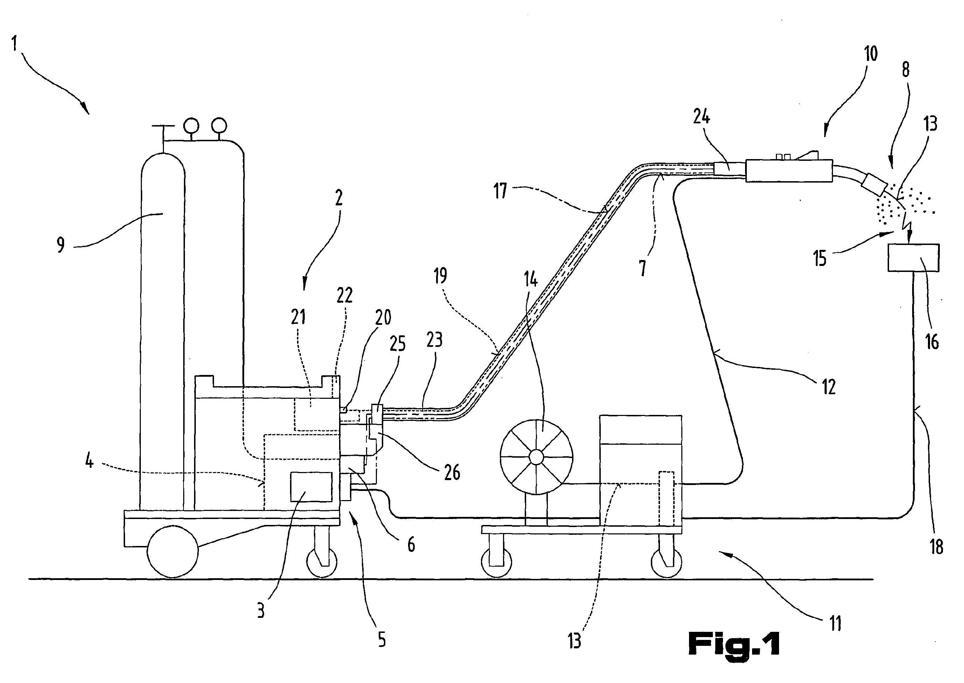

In Fig. 1 ist eine Schweißanlage bzw. ein Schweißgerät 1 für verschiedenste Schweißverfahren, wie z.B. MIG/MAG-Schweißen bzw. TIG-Schweißen oder Elektroden-Schweißverfahren, gezeigt. Selbstverständlich ist es möglich, daß die erfindungsgemäße Lösung bei einer Stromquelle bzw. einer Schweißstromquelle eingesetzt werden kann.

Das Schweißgerät 1 umfaßt eine Schweißstromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei bevorzugt über eine Versorgungsleitung 12 bzw. über eine Drahtseele ein Schweißdraht 13 von einer Vorratstrommel 14 in den Bereich des Schweißbrenners 10 zugeführt wird. Selbstverständlich ist es möglich, daß das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Der Strom zum Aufbauen eines Lichtbogens 15 zwischen dem Schweißdraht 13 und einem Werkstück 16 wird über eine Schweißleitung 17 vom Leistungsteil 3 der Schweißstromquelle 2 dem Schweißbrenner 10 bzw. dem Schweißdraht 13 zugeführt, wobei das zu verschweißende Werkstück 16 über eine weitere Schweißleitung 18 ebenfalls mit dem Schweißgerät 1, insbesondere mit der Schweißstromquelle 2, verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bzw. des Schweißdrahtes 13 beispielsweise über Kühlleitungen bewirkt werden kann.

Das Schweißgerät 1 weist weiters eine Ein- und/oder Ausgabevorrichtung 22 auf, über die die unterschiedlichsten Schweißparameter bzw. Betriebsarten des Schweißgerätes 1 oder Softwareprogramme eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten der Schweißanlage bzw. des Schweißgerätes 1 angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlußbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Schweißgehäuse des Schweißgerätes 1, verbunden.

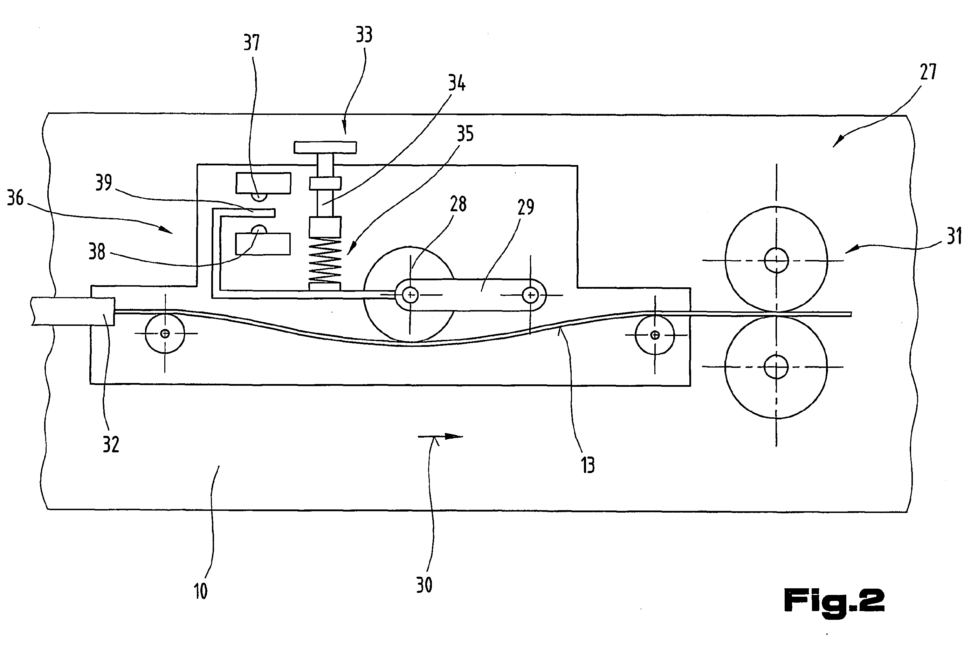

In Fig. 2 ist ein Detailausschnitt des Schweißbrenners 10 dargestellt, in dem eine Vorrichtung zum Fehlererkennen bei der Schweißdrahtförderung angeordnet ist.

Dabei wird die Vorrichtung durch eine Sensoranordnung 27 gebildet, die im Schweißbrenner 10 angeordnet ist. Die Sensoranordnung 27 kann auf die unterschiedlichsten Arten realisiert werden und ist nicht auf das dargestellte Ausführungsbeispiel beschränkt. Wesentlich ist hierbei, daß die Sensoranordnung 27 im Schweißbrenner 10 angeordnet ist und diese zum Erfassen des Förderdrucks und des Förderzugs für den Schweißdraht 13 ausgebildet ist. Die Sensoranordnung 27 kann beispielsweise auch durch einen Rohrsensor, wie er bereits in der österr. Patentanmeldung A 1968/99 "Schweißdrahtfördereinrichtung mit Haupt- und Hilfsantrieb" angemeldet wurde, realisiert werden.

Bei dem dargestellten Ausführungsbeispiel ist die Sensoranordnung 27 durch ein Drehrad 28, das über ein Halteelement 29 drehbar gelagert ist, gebildet, wobei das Drehrad 28 am Schweißdraht 13 anliegt. Weiters ist ersichtlich, daß der Sensoranordnung 27 in Förderrichtung des Schweißdrahtes 13 - gemäß Pfeil 30 - eine Antriebsvorrichtung 31 für die Schweißdrahtförderung nachgeordnet ist. Damit wird ein Schweißbrenner 10 verwendet, bei dem eine Drahtförderung direkt im Schweißbrenner 10 durchgeführt wird, wobei im Schweißgerät 1 oder in einem Drahtvorschubgerät 11 eine weitere Antriebsvorrichtung - nicht dargestellt - angeordnet ist.

Diese im Schweißgerät 1 oder im Drahtvorschubgerät 11 angeordnete Antriebsvorrichtung hat die Aufgabe, den Schweißdraht 13 von der Vorratstrommel 14 zu fördern und gleichzeitig einen Förderdruck für die Förderung des Schweißdrahtes 13 durch das Schlauchpaket 23 aufzubauen. Die weitere Antriebsvorrichtung 31 im Schweißbrenner 10 führt hingegen eine Zugbewegung, insbesondere einen Förderzug, auf den Schweißdraht 13 aus, d.h., daß durch die Antriebsvorrichtung 31 der Schweißdraht 13 aus dem Schlauchpaket 23 gezogen wird und anschließend an das Kontaktrohr des Schweißbrenners 10 - nicht dargestellt - weitergeleitet wird. Dabei hat es sich als vorteilhaft herausgestellt, daß die Antriebsvorrichtung 31 sehr nahe beim Kontaktrohr des Schweißbrenners 10 angeordnet wird.

Damit jedoch der Förderdruck bzw. der Förderzug erfaßt werden kann, ist es erforderlich, daß die Sensoranordnung 27 bzw. das Drehrad 28 eine Auslenkung bzw. ein ansatzweises Auslenken des Schweißdrahtes 13 aus seiner Förderrichtung verursacht, d.h., daß der Schweißdraht 13 im Schweißbrenner 10 derart abgelenkt wird, daß dieser einen bogenförmigen Verlauf einnimmt. Somit ist es möglich, aufgrund der Bogengröße bzw. aufgrund der Auslenkung den Förderdruck bzw. den Förderzug zu ermitteln, da sich die Bogengröße bzw. die Auslenkung des Schweißdrahtes 13 je nach Förderdruck bzw. Förderzug verändert. Somit wird bei zu geringer Bogengröße bzw. Auslenkung von der Sensoranordnung 27 ein Signal "zu geringer Förderdruck" ausgegeben, wogegen bei zu großer Bogengröße bzw. Auslenkung die Sensoranordnung 27 das Signal "zu hoher Förderdruck" ausgibt.

Die unterschiedlichen Bogengrößen bzw. Auslenkungen des Schweißdrahtes 13 können sich insofern ausbilden, da der Schweißdraht 13 in der Sensoranordnung 27 nicht geführt ist und somit eine Auslenkung möglich ist, d.h., daß eine Drahtseele 32, in der der Schweißdraht 13 über das Schlauchpaket 23 zum Schweißbrenner 10 geführt wird, bzw. ein Führungsschlauch vor der Sensoranordnung 23 bzw. innerhalb der Sensoranordnung 27 endet und anschließend der Schweißdraht 13 frei verläuft. Selbstverständlich ist es möglich, daß der Schweißdraht 13 anschließend wieder in eine Drahtseele 32 bzw. in einen Führungsschlauch eingeführt werden kann.

Damit jedoch eine vordefinierte Auslenkrichtung erreicht wird, muß der Schweißdraht 13 in der Sensoranordnung 27 bereits eine vordefinierte Auslenkung durchführen, die durch das Drehrad 28 verursacht wird. Dabei wird bei zu hohem Förderdruck der Schweißdraht 13 im Bereich der Sensoranordnung 27 weiter verformt, so daß sich eine Vergrößerung der Auslenkung bzw. der Bogengröße ergibt, da mehr Schweißdraht 13 in die Sensoranordnung 27 zugeführt wird, als von der Antriebsvorrichtung 31 abtransportiert wird. Im umgekehrten Sinne, also bei zu geringem Förderdruck, wird von der Antriebsvorrichtung 31 im Schweißbrenner 10 mehr Schweißdraht 13 aus der Sensoranordnung 27 gefördert, als die Antriebsvorrichtung im Schweißgerät 1 oder im Drahtvorschubgerät 11 zuführt, so daß die Auslenkung bzw. Bogengröße verkleinert wird.

Diese Bewegung des Schweißdrahtes 13 kann somit zum Feststellen, ob auf den geförderten Schweißdraht 13 ein Förderdruck oder ein Förderzug einwirkt benutzt werden, so daß es nunmehr möglich ist, den Förderdruck und den Förderzug zu erfassen, woraus entsprechende Signale bzw. Verfahrensschritte eingeleitet bzw. abgeleitet werden können. Dabei ist es möglich, daß über eine Einstellvorrichtung 33 die Druckkraft des Drehrades 28 auf den Schweißdraht 13, insbesondere für die Auslenkung des Schweißdrahtes 13, einstellbar ist, d.h., daß durch die Einstellvorrichtung 33 die Auslenkung und somit der Förderdruck festgelegt werden kann, da über die Einstellvorrichtung 33 das Drehrad 28 und somit der Schweißdraht 13 mit einem entsprechenden Druck abgelenkt wird, so daß erst dieser Druck zur Verstellung des Drehrades 28 überwunden werden muß.

Wird der Schweißdraht 13 quer zur seiner Förderrichtung durch Ausübung einer Druckkraft über die Ablenkrolle oder über das Drehrad 28 ausgelenkt, so wird bei einem gleichmäßigen Zu- und Abtransport des Schweißdrahtes 13 die Auslenkung des Schweißdrahtes 13 unverändert bleiben. D.h. die Menge des zugeförderten Schweißdrahtes 13 entspricht der Menge des durch die Antriebsvorrichtung 31 abgezogenen Schweißdrahtes 13 und der Schweißdraht 13 ist "spannungslos", d.h. er ist im Querschnittsbereich des Drehrades 28 in seiner Längsrichtung zug- und drucklos, also weder mit einer Druck-, noch mit einer Zugkraft belastet. Verlangsamt sich dagegen die abtransportierte Menge des Schweißdrahtes 13, die durch die Antriebsvorrichtung 31 bewirkt wird, so wird mehr Schweißdraht 13 zugeführt und führt dies zu einer Erhöhung der Druckspannung im Schweißdraht 13 im Querschnitt des Auflagebereiches des Drehrades 28 und zu einer stärkeren Auslenkung des Schweißdrahtes 13.

Wird dagegen mehr Schweißdraht 13 aus dem Bereich des Drehrades 28 abgezogen, als von einer nicht dargestellten Fördervorrichtung, die der erfindungsgemäßen Vorrichtung zur Fehlererkennung in Förderrichtung des Schweißdrahtes 13 vorgeordnet ist, zugeführt wird, so wird im Schweißdraht 13 im Bereich des Drehrades 28 eine Zugkraft aufgebaut, welche gegen die Auslenkkraft des Drehrades 28 der Sensoranordnung 27 eine Lageveränderung des Schweißdrahtes 13 und damit des Drehrades 28 entgegen der über das Drehrad 28 aufgebauten Druckkraft bewirkt. Somit ist die erfindungsgemäße Vorrichtung in der Lage, nicht nur den Druckaufbau im Schweißdraht 13 bei einer zu hohen nachgeförderten Menge an Schweißdraht 13 festzustellen, sondern auch den Aufbau einer zu hohen Zugkraft durch die im Schweißbrenner 10 angeordnete Antriebsvorrichtung 31 zu detektieren. Selbstverständlich kann der Aufbau einer zu hohen Zugkraft im Schweißdraht 13 auch als Signal ausgegeben oder das Feststellen eines zu geringen Förderdruckes signalisiert werden. Somit ist das Feststellen des Über- oder Unterschreitens eines gewissen Förderdruckes und/oder Förderzuges mit dieser Einrichtung in überraschend einfacher Weise erstmals möglich.

Bei dem gezeigten Ausführungsbeispiel wird die Einstellvorrichtung 33 derart gebildet, daß ein Stellelement 34 mit einer dazugehörigen Feder 35 zum Aufbau der Druckkraft auf das Drehrad 28 einwirkt. Dabei wird jedoch nur in einer Richtung ein entsprechender Druck aufgebaut, wobei es selbstverständlich möglich ist, daß die Einstellvorrichtung 33 derart ausgebildet wird, daß in beiden Richtungen der Schwenkbewegung des Drehrades 28 ein entsprechender Druck aufgebaut werden kann.

Weiters ist das Drehrad 28 und/oder das Halteelement 29 mit einem Kontaktelement 36 verbunden, so daß über das Kontaktelement 36 die Auslenkung des Drehrades 28 und somit die Auslenkung des Schweißdrahtes 13 erfaßt werden kann. Bei dem gezeigten Ausführungsbeispiel wird das Kontaktelement 36 durch zwei Kontakte 37, 38 gebildet, zwischen denen ein Kontaktstreifen 39 angeordnet ist. Der Kontaktstreifen 39 ist weiters mit dem Drehrad 28 bzw. mit dem Halteelement 29 verbunden, so daß bei einer ausreichenden Auslenkung des Drehrades 28 der Kontaktstreifen 39 an einer der beiden Kontakte 37, 38 zum Anliegen kommt und somit ein elektrisches Signal ausgegeben wird. Dabei wird bei einer Vergrößerung der Auslenkung die Bogengröße vergrößert, so daß der Kontaktstreifen 39 an dem Kontakt 38 zum Anliegen kommt, wogegen bei einer Verringerung der Auslenkung der Kontaktstreifen 39 am gegenüberliegenden Kontakt 37 zum Anliegen kommt.

Auf eine exakte Funktionsbeschreibung einer derartigen Sensoranordnung 27 wird nicht näher eingegangen, da das Funktionsprinzip sehr einfach ist. Es wird lediglich darauf hingewiesen, daß der Schweißdraht 13 in Richtung gemäß dem Pfeil 30 gefördert wird und der Schweißdraht 13 einer bewußten Auslenkung durch das Drehrad 28 unterzogen wird, wobei die Schwenkbewegung des Drehrades 28, insbesondere die Auslenkbewegung, erfaßt wird.

Durch eine derartige Sensoranordnung 27 im Schweißbrenner 10 ist es nunmehr möglich, daß ein Verfahren zur Fehlererkennung bei der Schweißdrahtförderung realisiert werden kann. Dabei wird von der Sensoranordnung 27 im Schweißbrenner 10 der Förderdruck und der Förderzug des Schweißdrahtes 13 erfaßt, wobei von der Sensoranordnung 27 jeweils ein Signal bei zu hohem oder zu niedrigem Förderdruck bzw. Förderzug ausgegeben wird. Die von der Sensoranordnung 27 ausgegebenen Signale können anschließend von einer Steuervorrichtung, insbesondere von der Steuervorrichtung 4 des Schweißgerätes 1, weiterverarbeitet werden bzw. können aufgrund dieser Signale spezielle Maßnahmen eingeleitet werden. Dabei ist es möglich, daß durch die Auswertung über die Steuervorrichtung 4 des Schweißgerätes 1 die Signale der Sensoranordnung 27 in Verbindung mit dem Schweißprozeß gesetzt werden, so daß beispielsweise bei einem Schweißstart die Steuervorrichtung 4 erkennen kann, daß das anliegende Signal "zu geringer Förderdruck" nicht auf einem Fehler beruht, da zuerst der entsprechende Förderdruck aufgebaut werden muß. Somit kann dieses Signal von der Steuervorrichtung 4 unterdrückt werden. Die Kopplung der Signale der Sensoranordnung 27 mit den Zuständen des Schweißprozesses bringen dabei erhebliche Vorteile, da von der Steuervorrichtung 4 festgestellt werden kann, ob es sich tatsächlich um einen Fehler handelt oder ob das Signal aufgrund einer Änderung im Schweißprozeß hervorgerufen wird.

Durch die Abgabe des Signals "zu hoher Förderdruck", also durch Berühren des Kontaktstreifens 39 mit dem Kontakt 38, wird der Steuervorrichtung 4 mitgeteilt, daß ein Fehler in der Schweißdrahtförderung nach der Sensoranordnung 27, insbesondere ein Festbrennen des Schweißdrahtes 13 am Kontaktrohr, in kürze bevorsteht, so daß von der Steuervorrichtung 4 die entsprechenden Vorkehrungen zum Verhindern des Festbrennens eingeleitet werden können. Wird hingegen das Signal "zu geringer Förderdruck" ausgegeben, also berührt der Kontaktstreifen 39 den Kontakt 37, so wird der Steuervorrichtung 4 mitgeteilt, daß ein Fehler in der Schweißdrahtförderung vor der Sensoranordnung 27, insbesondere ein Verschleiß der Drahtseele, in kürze bevorsteht. Somit kann von der Steuervorrichtung beispielsweise ein Warnsignal abgegeben werden, so daß bei der nächstbesten Gelegenheit die Drahtseele 32 gewechselt werden kann.

Somit ist es erstmals möglich, daß eine Erkennung des Festbrennens des Schweißdrahtes 13 am Kontaktrohr frühzeitig erkannt werden kann und entsprechende Regel- bzw. Steuerverfahren eingeleitet werden können, was speziell bei automatischen Schweißanlagen wesentliche Vorteile bringt. Das Erkennen des Schweißdrahtes 13 kann insofern von der Sensoranordnung 27 festgestellt werden, da kurz vor dem Festbrennen des Schweißdrahtes 13 am Kontaktrohr von der Antriebsvorrichtung 31 im Schweißbrenner 10 die Förderung des Schweißdrahtes 13 aufgrund der Erhöhung der Reibverluste reduziert wird, so daß eine Vergrößerung der Bogengröße bzw. der Auslenkung zustande kommt und somit über die Sensoranordnung 27 dies erkannt wird. Damit kann beispielsweise von der Steuervorrichtung 4 durch kurzzeitige Reduzierung des Schweißstromes in den meisten Fällen das Festbrennen des Schweißdrahtes 13 verhindert werden.

Der Verschleiß der Drahtseele 32 wird insofern erkannt, da bei konstantem Förderdruck die Reibverluste in der Drahtseele 32 erhöht werden, so daß von der Antriebsvorrichtung im Schweißgerät 1 bzw. im Drahtvorschubgerät 11 nicht mehr so viel Schweißdraht 13 gefördert werden kann und somit von der Antriebsvorrichtung 31 im Schweißbrenner 10 mehr Schweißdraht 13 abtransportiert wird, wodurch sich die Bogengröße bzw. die Auslenkung des Schweißdrahtes 13 in der Sensoranordnung 27 verringert.

Durch das Erkennen des Festbrennens des Schweißdrahtes 13 und dem Verschleiß der Drahtseele 32 können bei automatischen Schweißanlagen frühzeitige Stillstandszeiten durch Störungen in der Schweißdrahtförderung vermieden werden und somit die Ausfallkosten reduziert werden.

Selbstverständlich ist es möglich, daß das Kontaktelement 36 derart ausgebildet werden kann, daß eine ständige Überwachung der Bewegung des Drehrades 28 erfolgt. Dazu kann das Drehrad 28 beispielsweise mit einem Potentiometer oder einem Inkrementalgeber gekoppelt werden, so daß nach Überschreiten definierter Sollwerte ein entsprechendes Signal ausgegeben wird bzw. daß die Werte direkt von der Steuervorrichtung 4 ausgewertet werden können.

Der Ordnung halber sei abschließend darauf hingewiesen, daß zum besseren Verständnis des Aufbaus des Schweißgerätes 1 bzw. der Sensoranordnung 27 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Schweißgerät
- 2: Schweißstromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Schweißleitung
- 18: Schweißleitung
- 19: Kühlkreislauf
- 20: Strömungswächter

- 21: Wasserbehälter
- 22: Ein- und/oder Ausgabevorrichtung
- 23: Schlauchpaket
- 24: Verbindungsvorrichtung
- 25: Zugentlastungsvorrichtung

- 26: Gehäuse
- 27: Sensoranordnung
- 28: Drehrad
- 29: Halteelement
- 30: Pfeil

- 31: Antriebsvorrichtung
- 32: Drahtseele
- 33: Einstellvorrichtung
- 34: Stellelement
- 35: Feder

- 36: Kontaktelement
- 37: Kontakt
- 38: Kontakt
- 39: Kontaktstreifen

## Patentansprüche

1. Vorrichtung zur Fehlererkennung bei der Schweißdrahtförderung, bei der in einem Schweißbrenner und in einem Schweißgerät je eine Antriebsvorrichtung angeordnet bzw. eingebaut ist, **dadurch gekennzeichnet, daß** der Schweißbrenner eine Sensoranordnung (27) zum Erfassen des Förderdrucks und/oder des Förderzugs für den Schweißdraht (13) aufweist, der in Förderrichtung des Schweißdrahtes (13) die Antriebsvorrichtung (31) für die Schweißdrahtförderung im Schweißbrenner (10) nachgeordnet ist und die Sensoranordnung (27) eine Auslenkung bzw. ein ansatzweises Auslenken des Schweißdrahtes (13) aus seiner Förderrichtung im Schweißbrenner (10) verursacht.

2. Vorrichtung nach Anspruch 1, **dadurch gekennzeichnet, daß** die Sensoranordnung (27) durch ein Drehrad (28) gebildet ist, das über ein Halteelement (29) dreh- und schwenkbar gelagert ist und zur Auflage auf dem Schweißdraht (13) ausgebildet ist.

3. Vorrichtung nach Anspruch 2 **dadurch gekennzeichnet, daß** eine Einstellvorrichtung (33) für die Druckkraft des Drehrades (28) auf den Schweißdraht (13), insbesondere für die Auslenkung, angeordnet ist.

4. Vorrichtung nach einem der Ansprüche 2 oder 3, **dadurch gekennzeichnet, daß** das Drehrad (28) und/oder das Halteelement (29) mit einem Kontaktelement (36) verbunden ist.

5. Vorrichtung nach Anspruch 4, **dadurch gekennzeichnet, daß** das Kontaktelement (36) aus Kontakten (37, 38) und einem Kontaktstreifen (39) gebildet ist.

6. Vorrichtung nach einem der vorhergehenden Ansprüche, **dadurch gekennzeichnet, daß** die Sensoranordnung (27) durch einen Rohrsensor gebildet ist.

7. Vorrichtung nach einem der vorhergehenden Ansprüche, **dadurch gekennzeichnet, daß** die Sensoranordnung (27) zur Ausgabe eines Signales "zu geringer Förderdruck" bei zu geringer Bogengröße bzw. Auslenkung des Schweißdrahtes (13) und zur Ausgabe des Signales "zu hoher Förderdruck" bei zu großer Bogengröße bzw. Auslenkung ausgebildet ist.

8. Verfahren zur Fehlererkennung bei der Schweißdrahtförderung, wobei der Schweißdraht von dem Drahtvorrat bzw. der Drahtrolle über eine Antriebsvorrichtung in ein Schlauchpaket gefördert wird und von diesem über ein weitere Antriebsvorrichtung im Schweißbrenner an die Schweißstelle gefördert wird, **dadurch gekennzeichnet, daß** von einer Sensoranordnung im Schweißbrenner ein Förderdruck und ein Förderzug des Schweißdrahtes erfaßt wird, wobei von der Sensoranordnung jeweils ein Signal bei zu hohem oder zu niedrigem Förderdruck ausgegeben wird und der Sensoranordnung in Förderrichtung des Schweißdrahtes die Antriebsvorrichtung im Schweißbrenner nachgeschaltet wird, wobei von dieser eine Auslenkung bzw. ein ansatzweises Auslenken des Schweißdrahtes (13) aus seiner Förderrichtung im Schweißbrenner (10) verursacht wird.

9. Verfahren nach Anspruch 8, **dadurch gekennzeichnet, daß** der Schweißdraht durch die Sensoranordnung, insbesondere über das Drehrad, abgelenkt wird.

10. Verfahren nach Anspruch 8 oder 9, **dadurch gekennzeichnet, daß** die Bewegung des Drehrades, insbesondere die Auslenkbewegung, erfaßt wird.

11. Verfahren nach einem der Ansprüche 8 bis 10, **dadurch gekennzeichnet, daß** bei dem Signal "zu hoher Förderdruck" der Steuervorrichtung mitgeteilt wird, daß ein Fehler in der Schweißdrahtförderung nach der Sensoranordnung, insbesondere ein Festbrennen des Schweißdrahtes am Kontaktrohr, in kürze bevorsteht.

12. Verfahren nach einem der Ansprüche 8 bis 11, **dadurch gekennzeichnet, daß** bei dem Signal "zu geringer Förderdruck" der Steuervorrichtung mitgeteilt wird, daß ein Fehler in der Schweißdrahtförderung vor der Sensoranordnung, insbesondere ein Verschleiß einer Drahtseele, in kürze bevorsteht.

13. Verfahren nach einem der Ansprüche 8 bis 12, **dadurch gekennzeichnet, daß** die Signale der Sensoranordnung von einer Steuervorrichtung weiterverarbeitet werden.

## Claims

1. System for detecting faults during feeding of a welding rod, in which a respective drive system is disposed on or integrated in a welding torch and in a welding apparatus, **characterised in that** the welding torch has a sensor system (27) for detecting the feeding pressure and/or feeding traction for the welding rod (13), and the drive mechanism (31) for feeding the welding rod is disposed in the welding torch (10) downstream of it in the feed direction of the welding rod (13), and the sensing system (27) causes the welding rod to deflect out or deflect aside from its feed direction in the welding torch (10).

2. System as claimed in claim 1, **characterised in that** the sensor system (27) is provided in the form of a rotating wheel (28), which is pivotably mounted via a retaining element (29) and is designed to sit in contact with the welding rod (13).

3. System as claimed in claim 2, **characterised in that** an adjusting mechanism (33) is provided to generate the contact force of the rotating wheel (28) on the welding rod (13), in particular to generate the deflection.

4. System as claimed in one of claims 2 or 3, **characterised in that** the rotating wheel (28) and/or the retaining element (29) is connected to a contact element (36).

5. System as claimed in claim 4, **characterised in that** the contact element (36) is provided in the form of contacts (37, 38) and a contact strip (39).

6. System as claimed in one of the preceding claims, **characterised in that** the sensor system (27) is a tubular sensor.

7. System as claimed in one of the preceding claims, **characterised in that** the sensor system (27) is designed to emit a "feed pressure too low" signal when the extent of bending or deflection in the welding rod (13) is too low and to emit a "feed pressure too high" signal when the extent of bending or deflection is too high.

8. Method of detecting faults during feeding of a welding rod, whereby the welding rod is fed from the rod supply or rod roller via a drive system into a hose pack and from there is fed via another drive system in the welding torch or in the region of the welding torch on to the welding point, **characterised in that** a feeding pressure and a feeding traction of the welding rod are detected by a sensor system in the welding torch and the sensor system emits a signal whenever the feeding pressure is too high or too low, and the drive system is disposed in the welding torch downstream of it in the feed direction of the welding rod and causes the welding rod (13) to deflect out or deflect aside from its feed direction in the welding torch (10).

9. Method as claimed in claim 8, **characterised in that** the welding rod is deflected by the sensor system, in particular by the rotating wheel.

10. Method as claimed in claim 8 or 9, **characterised in that** the motion of the rotating wheel, in particular the deflecting motion, is detected.

11. Method as claimed in one of claims 8 to 10, **characterised in that** the "feed pressure too high" signal informs the control system that a fault is shortly about to occur downstream of the sensor system, in particular burning of the welding rod on the contact sleeve.

12. Method as claimed in one of claims 8 to 11, **characterised in that** the "feed pressure too low" signal informs the control system that a fault is shortly about to occur upstream of the sensor system, in particular wear on a rod core.

13. Method as claimed in one of claims 8 to 12, **characterised in that** the signals of the sensor system are further processed by a control system.

## Revendications

1. Dispositif de détection de défauts lors de l'avance d'un fil d'apport, dans lequel est disposé respectivement monté dans un chalumeau et dans un appareil à souder respectivement un dispositif d'entraînement, **caractérisé en ce que** le chalumeau présente un agencement de détection (27) pour détecter la pression lors de l'avance et/ou la traction lors de l'avance du fil d'apport (13) en aval duquel est disposé, dans la direction d'avancement du fil d'apport (13), le dispositif d'entraînement (31) pour l'avancement du fil d'apport dans le chalumeau (10), et l'agencement de détection (27) provoque une déviation respectivement un début de déviation du fil d'apport (13) de sa direction d'avancement dans le chalumeau (10).

2. Dispositif selon la revendication 1, **caractérisé en ce que** l'agencement de détection (27) est formé par une roue tournante (28) qui est logée par un élément de retenue (29) d'une manière tournante et pivotante et qui est réalisée pour s'appliquer au fil d'apport (13).

3. Dispositif selon la revendication 2, **caractérisé en ce qu'**un dispositif de réglage (33) de la force de pression de la roue tournante (28) est disposé sur le fil d'apport (13), en particulier pour la déviation.

4. Dispositif selon l'une des revendications 2 ou 3, **caractérisé en ce que** la roue tournante (28) et/ou l'élément de retenue (29) est relié à un élément de contact (36).

5. Dispositif selon la revendication 4, **caractérisé en ce que** l'élément de contact (36) est formé par des contacts (37, 38) et une bande de contact (39).

6. Dispositif selon l'une des revendications précédentes, **caractérisé en ce que** l'agencement de détection (27) est formé par un capteur tubulaire.

7. Dispositif selon l'une des revendications précédentes, **caractérisé en ce que** l'agencement de détection (27) est réalisé pour l'émission d'un signal "pression d'avancement trop faible" lors d'une grandeur d'arc trop petite respectivement lors de la déviation du fil d'apport (13) et pour l'émission du signal "pression d'avancement trop élevée" lors d'une grandeur d'arc respectivement déviation trop grande.

8. Procédé de détection de défauts lors de l'avance d'un fil d'apport, où le fil d'apport est transporté de la réserve de fil respectivement du rouleau de fil par un dispositif d'entraînement dans un paquet de tuyaux et est transporté par celui-ci par un autre dispositif d'entraînement dans le chalumeau à l'emplacement de soudage, **caractérisé en ce qu'**un agencement de détection dans le chalumeau détecte une pression d'avancement et une traction d'avancement du fil d'apport, où est émis par l'agencement de détection à chaque fois un signal lors d'une pression d'avancement trop élevée ou trop basse, et où est monté en aval de l'agencement de détection dans la direction d'avancement du fil d'apport le dispositif d'entraînement dans le chalumeau, où est provoquée par celui-ci une déviation respectivement un début de déviation du fil d'apport (13) de sa direction d'avancement dans le chalumeau (10).

9. Procédé selon la revendication (8), **caractérisé en ce que** le fil d'apport est dévié par l'agencement de détection, en particulier par la roue tournante.

10. Procédé selon la revendication 8 ou 9, **caractérisé en ce que** le mouvement de la roue tournante, en particulier le mouvement de déviation, est détecté.

11. Procédé selon l'une des revendications 8 à 10, **caractérisé en ce que** dans le cas du signal "pression d'avancement trop élevée" on informe le dispositif de commande qu'un défaut dans l'avancement du fil d'apport en aval de l'agencement de détection, en particulier un accrochage du fil d'apport au tube de contact, va se produire dans un temps proche.

12. Procédé selon l'une des revendications 8 à 11, **caractérisé en ce que** lors du signal "pression d'avancement trop basse", on informe le dispositif de commande qu'un défaut dans l'avance du fil d'apport en amont de l'agencement de détection, en particulier une usure d'une âme de fil, va se produire dans un temps proche.

13. Procédé selon l'une des revendications 8 à 12, **caractérisé en ce que** les signaux de l'agencement de détection sont traités ultérieurement par un dispositif de commande.
